# EUROPEAN PATENT APPLICATION

(11) **EP 0 675 296 A1**
(43) Date of publication of application: **04.10.1995**
(21) Application number: 95301916.3
(22) Date of filing: 21.03.1995
(51) Int. Cl.: F16C 11/06

(54) **Ball joint**

(30) Priority: 30.03.1994 JP 61480/94
(71) Applicant: KABUSHIKI KAISHA SOMIC ISHIKAWA, Sumida-ku Tokyo (JP)
(72) Inventor: Oda, Takahiro, c/o Somic Ishikawa, Hamamatsu-shi, Shizuoka (JP); Suzuki, Keiichiro, c/o Somic Ishikawa, Hamamatsu-shi, Shizuoka (JP); Fukukawa, Takao, c/o Somic Ishikawa, Hamamatsu-shi, Shizuoka (JP)
(74) Representative: Ben-Nathan, Laurence Albert

(57) **Abstract**

A resin bearing seat crimped into a metallic housing (2) for a ball joint (1) includes first (30) and second (31) annular slide portions in its interior separated by a first annular groove (32). A second annular groove (27) in an exterior of the bearing seat forms, with the first annular groove (32), an elastic tip (33). The elastic tip (33) permits deformation of the second slide portion (31) partly into the first annular groove (32) to accommodate heavy loading without permanent deformation of the bearing seat. The second annular groove (27) separates first and second load-bearing portions (23,24) on the exterior of the bearing seat for contacting an inner surface of the housing (6).

## Description

### BACKGROUND OF THE INVENTION

### FIELD OF THE INVENTION

The present invention relates to a ball joint to be used, for example in the steering mechanism or the suspension mechanism of a vehicle.

An example of conventional ball joints of this type is disclosed in Japanese Patent Publication No. 44620/1978, in which a bearing seat, which has both resiliency and rigidity, includes slide surfaces at positions respectively above and below the equator of the ball head. The slide surfaces have a curvature radius larger than the diameter of the ball head of the ball stud so that the ball head of the ball stud is enveloped in the hollow of the bearing seat and slidably supported by ring-shaped bearing zones which consist of said vertically arranged pair of slide surfaces. The inner chamber of the housing of the ball joint is open at both ends. The bearing seat is fitted in the inner chamber. A sealing member is pressed against an annular ridge. A dome-shaped portion is formed at one end of the bearing seat. The dome-shaped portion is curved in elastic deformation by the annular bearing zone at the upper slide surface of the bearing seat and the annular concavity between the annular ridge and the dome-shaped portions of the bearing seat.

The elastic restoring force resulting from the above bending deformation of the dome-shaped portion maintains the energy to push the ball head, thereby giving the ball joint a capacity for friction compensation. At the same time, the bending deformation of the dome-shaped portion also releases the load applied to the ball stud, thus giving the ball stud a capacity for withstanding load, and compensates dimensional tolerance of component parts, thereby ensuring a stable operation torque and smooth operation.

However, a ball joint described in the above Japanese Patent Publication No. 44620/1978 presents a problem in that when a heavy load is applied to its ball stud, the annular ridge and the dome-shaped portion are exposed to the load, which may cause permanent setting and/or damage to the bearing seat. Since the radius of the slide surfaces is greater than the curvature radius of the ball head, which means that the bearing seat comes into line-contact with the ball head, the contact area is exposed to the danger of permanent setting and/or damage especially when bearing a great load.

### OBJECTS AND SUMMARY OF THE INVENTION

It is an object of the invention to provide a ball joint which overcomes the drawbacks of the prior art.

In order to solve the above problem, an object of the present invention is to provide, at a low production cost, a ball joint with high rigidity which is capable of compensating the dimensional tolerance of component parts and has superior load-sustenance capacity and durability.

Briefly stated, the present invention provides a resin bearing seat crimped into a metallic housing for a ball joint which includes first and second annular slide portions in its interior separated by a first annular groove. A second annular groove in an exterior of the bearing seat forms, with the first annular groove, an elastic tip. The elastic tip permits deformation of the second slide portion partly into the first annular groove to accommodate heavy loading without permanent deformation of the bearing seat. The second annular groove separates first and second load- bearing portions on the exterior of the bearing seat for contacting an inner surface of the housing.

According to an embodiment of the invention, there is provided a ball joint comprising: a housing, an aperture in the housing leading into an inner chamber, a bottom portion of the inner chamber being located at the end of the housing opposite to the aperture, a ball stud, the ball stud including a ball head and a stud portion integrally formed therewith, a bearing seat disposed in the inner chamber, the bearing seat enveloping the ball head, with the stud portion protruding from the aperture, the bearing seat being a synthetic resin which has both resiliency and rigidity, thereby permitting the ball head to slide therein, a plurality of load-bearing portions formed on an outer surface of the bearing seat facing a bottom portion of the inner chamber, the bottom portion of the inner chamber being located opposite the insertion hole at an approximately concentric position therewith, the plurality of load-bearing portions being disposed at at least first and second different distances from a center of the bearing seat, the at least first and second load-bearing portions contacting the inner chamber of the housing, a concavity in an outer surface of the bearing seat, the concavity being located between the at least first and second load-bearing portions and facing the bottom portion so that a space is formed between the bearing seat and the bottom portion, a cavity portion in an inner surface of the bearing seat, the inner surface facing the ball head so that the cavity portion forms a gap between the bearing seat and the ball head, and a slide portion formed in an inner surface of the bearing seat facing the ball head, the slide portion being located inward toward a bottom from the concavity, the slide portion being elastically deformable into the cavity portion by force applied thereto from the ball head, whereby the ball head is slideable on the slide portion.

According to a feature of the invention, there is provided a resin bearing seat for a bearing, comprising: an inner cavity, at least first and second load-bearing portions in an inner surface of the inner cavity, a first annular groove in the inner surface between the first and second slide portions, a second annular groove in an outer surface of the bearing seat, the second annular groove forming, with the first annular groove, an elastic tip, and the elastic tip being elastically deformable to permit the second slide portion to deform the second slide portion at least partly into the first annular groove.

According to a further feature of the invention, there is provided a ball joint comprising: a metallic housing, the metallic housing including an inner chamber, a resin bearing seat, the bearing seat being disposed in the inner chamber, an inner cavity in the bearing seat, at least first and second slide portions in an inner surface of the inner cavity, a first annular groove in the inner surface between the first and second slide portions, a second annular groove in an outer surface of the bearing seat, the second annular groove forming, with the first annular groove, an elastic tip, and the elastic tip being elastically deformable to permit the second slide portion to deform the second slide portion at least partly into the first annular groove.

A ball joint according to the present invention comprises a housing having an aperture and an inner chamber, the bottom portion of which is located at the end opposite to the aperture; a ball stud having a ball head to be disposed in the inner chamber of the housing, and a stud portion which is integrally formed with the ball head so as to project from the aperture; and a bearing seat made of synthetic resin which has both resiliency and rigidity, the bearing seat to be disposed in the inner chamber of the housing to envelop the ball head of the ball stud, permitting the ball head to slide therein, with the stud portion of the ball stud projecting from an insertion hole of the bearing seat. The bearing seat includes a plurality of load-bearing portions formed on the outer surface that faces the bottom portion of the inner chamber of the housing, the bottom portion of the inner chamber being located opposite to the insertion hole at an approximately concentric position therewith, the load-bearing portions being formed at respective positions at different distances from the center of the bearing seat and capable of coming into contact with the inner chamber of the housing; a concavity provided in the outer surface of the bearing seat, the concavity being located between the load-bearing portions and facing the bottom portion so that a space is provided between the bearing seat and the bottom portion; a cavity portion provided in the inner surface of the bearing seat, the inner surface facing the ball head so that the cavity portion forms a gap between the bearing seat and the ball head; and a slide portion formed on the inner side of the bearing seat, in other words on the surface facing the ball head of the ball stud, the slide portion being located behind the concavity and capable of curving in elastic deformation into the cavity portion and coming into contact with the ball head of the ball stud in such a manner that the ball head is capable of sliding on the slide portion.

A further embodiment of the invention provides a ball joint wherein the bearing seat is formed such that the outer diameter thereof becomes narrower as it descends from the insertion hole towards the load-bearing portions and that the outer surface of the portion near the load-bearing portions faces the inner surface of the housing, a gap for movement being provided therebetween, so that enveloping the ball head causes said portion near the load-bearing portions to curve in elastic deformation towards the gap for movement, in such a direction as to increase the diameter of the bearing seat.

Slide portions of the bearing seat of a ball joint are so formed as to be elastically deformed because of the concavity and the cavity portion when the slide portions come into contact with the ball head and permit the ball head to slide thereon. By means of this configuration of the slide portions in addition to elastic bending deformation of the bearing seat by the load-bearing portions and the concavity, the load-bearing portions being in contact with the bottom portion of the inner chamber of the housing and the concavity facing the bottom portion with a specified space therebetween, the energy to push the ball head, which is generated by the elastic restoring force of the bearing seat, is maintained, thereby giving the ball joint a capability for friction compensation, and the dimensional tolerance of component parts is compensated. Furthermore, when a heavy load is applied to the ball stud, the elastic deformation of the slide portions and the bending deformation of the bearing seat by means of the load-bearing portions and the concavity absorb the load, so that the bearing seat is prevented from permanent setting and damages. Thus, a ball joint according to the present invention has a superior load-sustenance capacity and durability.

A ball joint according to claim 2 is a ball joint as claimed in claim 1, wherein the bearing seat is formed such that the outer diameter thereof becomes narrower as it descends from the insertion hole towards the load-bearing portions and that the outer surface of the portion near the load-bearing portions faces the inner surface of the housing with a gap for movement therebetween. Therefore, enveloping the ball head causes said portion near the load-bearing portions to curve in elastic deformation towards said gap for movement, in such a direction as to increase the diameter of the bearing seat, and the energy to push the ball head, which is generated by the elastic restoring force of the bearing seat is thus increased. As a result, the capacity of the ball stud for friction compensation as well as the capacity for compensating dimensional tolerance of component parts is increased, and production of component parts is therefore simplified. In addition, the productivity is improved, meaning that the yield is improved, which makes reduction of production cost possible.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is an enlarged sectional view of a part of a ball joint according to an embodiment of the present invention.

Fig. 2 is a partially cut-out side view of the ball joint of Fig. 1.

Fig. 3 is a sectional view of the housing of the ball joint of Fig. 1 before assembly.

Fig. 4 is a sectional view of the ball joint of Fig. 1 in the assembled state.

Fig. 5 is a sectional view of the bearing seat of the ball joint of Fig. 1.

Fig. 6 is a bottom plan view of the ball joint of Fig. 1.

Fig. 7 is an enlarged sectional view of a part of the ball joint of Fig. 1 in the assembled state.

Fig. 8 is a partially cut-out side view of the ball joint of Fig. 1.

### DETAILED DESCRIPTION OF PREFERRED EMBODIMENTS

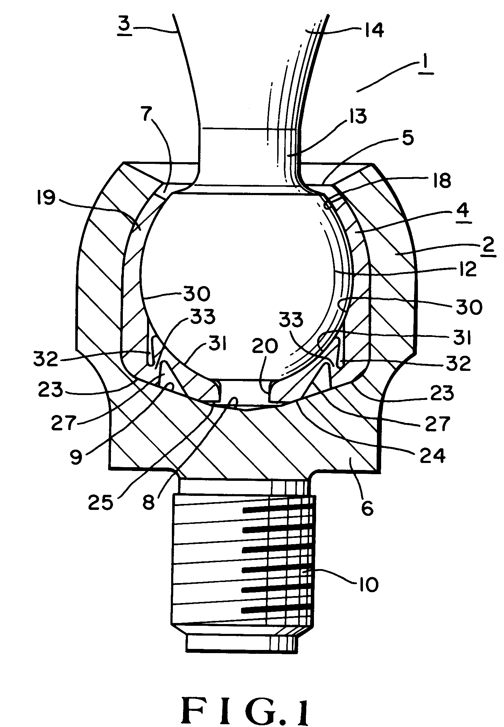

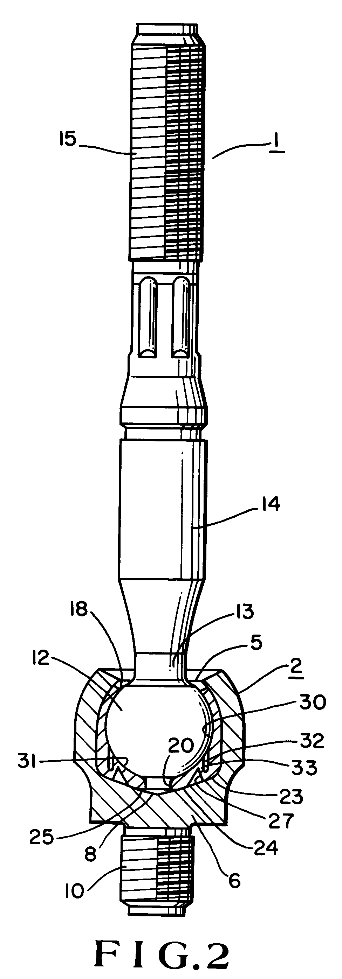

Referring to Figs. 1 and 2, a ball joint, shown generally at 1, a ball joint having a cylindrical metal housing 2 containing a bearing seat 4. A metal ball stud 3 is enclosed in bearing seat 4. Bearing seat 4 is preferably made of synthetic resin.

Although not stated as a limitation of the present invention, ball joint 1 may be used in the steering mechanism or the suspension mechanism of an automobile, most typically at the end of a tie rod which is adjacent to a rack shaft in a rack-and-pinion steering mechanism. The elements of an automobile suspension named in the foregoing are conventional, and are therefore neither shown nor described in detail.

Referring now to Figs. 1 to 4, housing 2 includes a top aperture 5 defining a top of an inner chamber 7. A bottom portion 6 of inner chamber 7 is located opposite aperture 5.

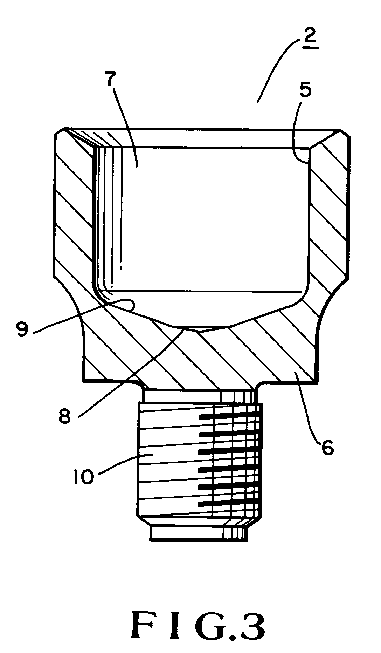

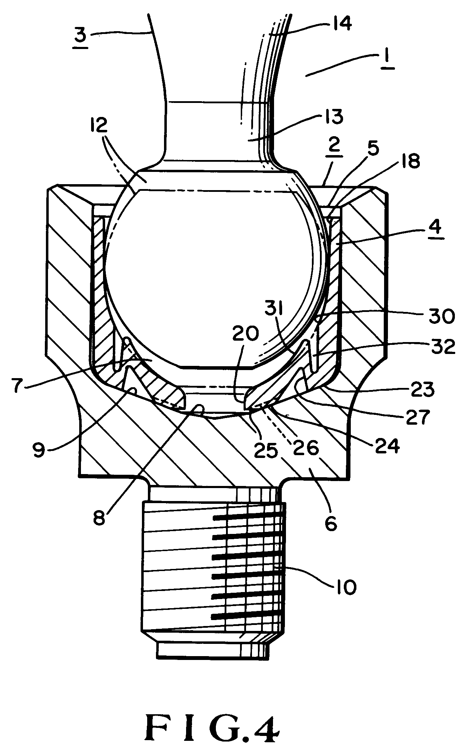

In the pre-assembly condition shown in Figs. 3 and 4, inner chamber 7 is generally cylindrical shape with a conical surface portion 8 at its bottom. An arc-shaped receiving surface 9 is formed contiguously around the outer rim of conical surface portion 8. A male screw portion 10 projects downward from the center of the lower surface of bottom portion 6.

Ball stud 3 consists of a spherical ball head 12 and a stud portion 14, which is integrally formed with ball head 12. A narrower neck portion 13 joins ball head 12 and stud portion 14. An externally threaded portion 15 is formed around the end of stud portion 14.

Referring now also to Figs. 4 to 6, bearing seat 4 in inner chamber 7, is made of polyacetal resin or any other hard synthetic resin having suitable resiliency and sufficient rigidity to sustain high loads with good load-bearing characteristics.

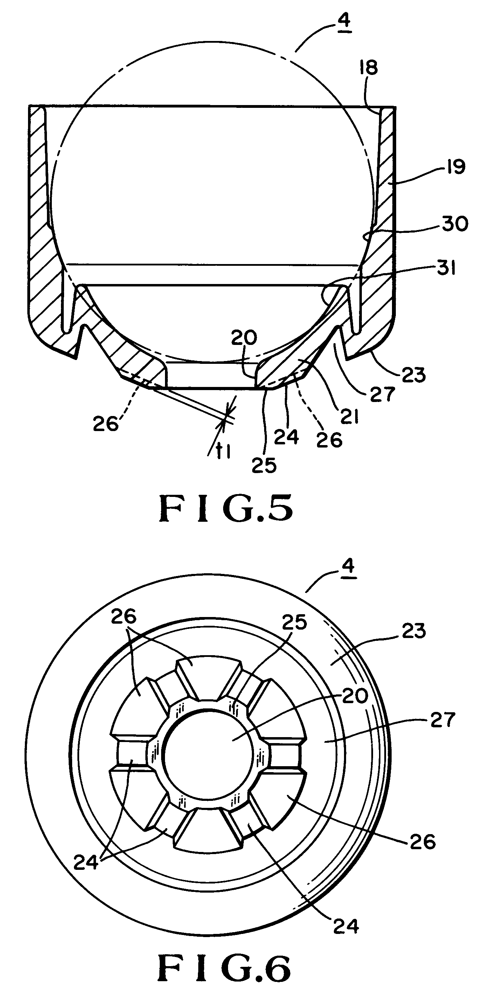

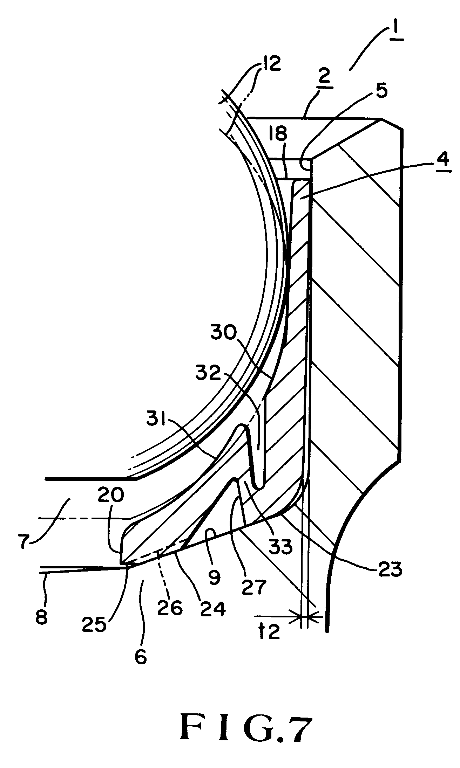

In its undistorted form before assembly, as shown in Fig. 5, bearing seat 4 includes a cylindrical body 19. The hollow of cylindrical body 19 opens into an insertion hole 18, through which ball head 12 of ball stud 3 is inserted. The other end of cylindrical body 19 is connected to an integrally formed bottom portion 21 having a sliding hole 20. The diameter of sliding hole 20 is smaller than a diameter D of ball head 12. Before the ball joint is assembled, bearing seat 4 is in a nearly cylindrical shape with a bottom. More precisely, as shown in Fig. 7, bearing seat 4 is formed into a nearly cylindrical shape having a bottom and narrowing towards bottom portion 21, with the outer diameter of bottom portion 21 having a radius approximately 0.2 to 0.3 mm less than the radius of the portion around insertion hole 18. Further, bottom portion 21 may not have sliding hole 20.

Ring-shaped first and second load-bearing portions 23/24 are disposed around an outer surface of bottom portion 21 of bearing seat 4. As will be explained, load-bearing portions 23/24, in the assembled bearing, contact receiving surface 9 of bottom portion 6 of housing 2. A buffer surface 25 is formed around the rim of sliding hole 20 of bottom portion 21 in such a manner that buffer surface 25 faces conical surface portion 8 of bottom portion 6 of housing 2, with a specified space therebetween.

As best seen in Fig. 6, a plurality of grooves 26 in the lower end surface of second load-bearing portion 24 extend radially outward from the center of bottom portion 21.

As shown in Fig. 5, grooves 26 are formed to a specified depth t₁, for example approximately 0.3 mm, from the lower end surface of second load-bearing portion 24.

An annular concavity 27 opens downward in an upside-down V-shape in the outer surface of bottom portion 21 of bearing seat 4, between first and second annular load-bearing portions 23/24.

A first slide portion 30 in cylindrical body 19, adjacent bottom portion 21 includes a plurality of partitions radially arranged in the direction outward from the center of bottom portion 21 projecting inward from the inner surface of cylindrical body 19. The end of first slide portion 30 is formed into an arc, which has a curvature radius R₁ virtually identical to radius D of ball head 12 of ball stud 3. First slide portion 30 permits ball head 12 to slide thereon when it comes into contact therewith.

A second slide portion 31 consists of partitions on the inner surface of bottom portion 21. The partitions of second slide portion 31 extend in the radially outward direction from the center of bottom portion 21 and projecting inward, at a location that places concavity 27 behind second slide portion 31. The end of second slide portion 31 is formed into an arc having a curvature radius R₂, which is smaller than radius D of ball head 12 of ball stud 3. This permits ball head 12 to slide on second slide portion 31 when ball head 12 is assembled into contact therewith.

An annular cavity portion 32 opens upward in a V-shape in an inner surface of bearing seat 4, approximately where cylindrical body 19 meets bottom portion 21 and between first and second slide portions 30/31. Bearing seat 4 also has a thin elastic tip 33 (Fig. 7) which is defined by cavity portion 32 and concavity 27 so that bearing seat 4 has a shape similar to it being folded inward above the location of first load-bearing portion 23. Because of this elastic tip 33 second slide portion 31 of bottom portion 21 is capable of elastic deformation from stress applied to it by cylindrical body 19.

Because of concavity 27, second slide portion 31 is formed into a thin portion having a curvature radius R₂ smaller than radius D of ball head 12. Therefore, when ball head 12 comes into contact with second slide portion 31, the portion of second slide portion 31 which is adjacent to cavity portion 32 curves towards cavity portion 32 in elastic deformation so that the surface of second slide portion 31 comes in contact with ball head 12, along the outer surface of ball head 12, while the portion of second slide portion 31 adjacent to second load-bearing portion 24 curves in elastic deformation with elastic tip 33 as the base of the deformation in such a manner that the end of this portion moves toward ball head 12. Thus, second slide portion 31 comes into surface-contact with the outer surface of ball head 12, permitting ball head 12 to slide thereon.

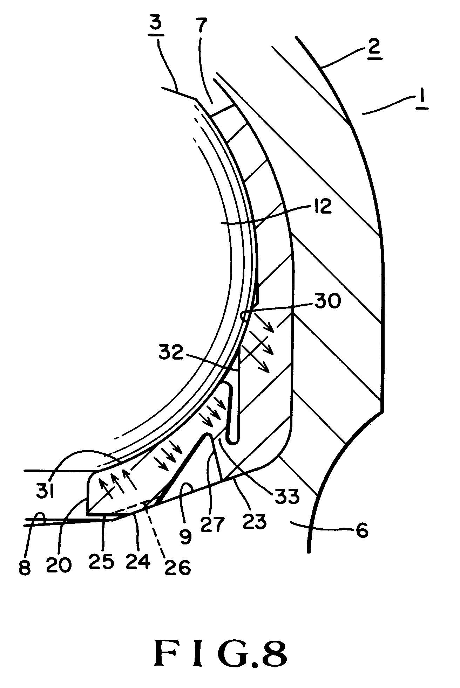

As shown in Figs. 4 and 7, bearing seat 4 is inserted, with bottom portion 21 head-first, into inner chamber 7 of housing 2 through aperture 5. Then, ball head 12 of ball stud 3 is inserted into the hollow of bearing seat 4, and, as shown in Fig. 1 and 8, the vicinity of aperture 5 of housing 2 is deformed inward by crimping together with the vicinity of insertion hole 18 of cylindrical body 19 of bearing seat 4 so as to slidably capture ball head 12 of ball stud 3.

Next, the assembly procedure of the above embodiment is explained.

First, bearing seat 4 is inserted through aperture 5 into inner chamber 7 of housing 2 so that buffer surface 25 of bottom portion 21 faces conical surface portion 8 of bottom portion 6 of housing 2, with a specified space therebetween. Second load-bearing portions 24 of bottom portion 21 contacts receiving surface 9 of bottom portion 6 of housing 2.

As a result of the insertion of bearing seat 4, the outer peripheral surface of the lower portion of cylindrical body 19 faces the inner surface of inner chamber of housing 2, with a gap having a specified dimension t₂ (Fig. 7) therebetween. Gap t₂ may range, for example, from approximately 0.2 mm to 0.3 mm. Concavity 27 of bottom portion 21 of bearing seat 4 faces receiving surface 9 of bottom portion 6 of housing 2 at a specified distance therefrom, thereby forming an annular space, and grooves 26 of second load-bearing portion 24 also face receiving surface 9, with a gap having a specified dimension t₁, (Fig. 5) therebetween. gap t₁, may be, for example, approximately 0.3 mm.

Ball head 12 of ball stud 3 is pushed through insertion hole 18 into the hollow of bearing seat 4. While inserting ball head 12, first slide portion 30 contacts ball head 12 and is pushed outward to widen the upper portion of first slide portion 30. Further insertion of ball head 12 pushes the portion of second slide portion 31 which is adjacent to cavity portion 32 outward to make it curve in elastic deformation toward cavity portion 32 so that it conforms to a substantial portion of the outer peripheral surface of ball head 12. The restoring force of this elastic deformation enlarges the downward aperture of concavity 27 and also causes second load-bearing portion 24 to slide on receiving surface 9 towards conical surface portion 8 so that the end of second slide portion 31 which is adjacent to second load-bearing portion 24 moves in the direction of ball head 12, with elastic tip 33 acting as the fulcrum, until second slide portion 31 comes into surface-contact with the outer surface of ball head 12. When second load-bearing portion 24 slides on receiving surface 9 towards conical surface portion 8, buffer surface 25 prevents second load-bearing portion 24 from coming in contact with conical surface portion 8, thus ensuring hindrance-free sliding.

As a result of the forced insertion of ball head 12, which causes the elastic deformation of first and second slide portions 30/ 31, the portion of the outer surface of cylindrical body 19 near bottom portion 21 resists elastic deformation under the force of bearing seat 4 and stretches towards the inner chamber of housing 2, as if cylindrical body 18 were expanded.

The lip of aperture 5 of housing 2 is crimped inward, with ball head 12 of ball stud 3 slidably contained in housing 2. This completes the assembly of ball joint 1.

Next, the function of the present embodiment is explained.

When ball head 12 is slidably enveloped in bearing seat 4, stress applied by ball head 12 to bearing seat 4 works in the directions represented by arrows shown in Fig. 8. In other words, in resistance to this stress, pushing force which is the restoring force of bearing seat 4 resulting from its elasticity, is applied by bearing seat 4 to ball head 12. Pushing force generated by the elastic deformation of second slide portion 31, of which the end near second load-bearing portion 24 moves towards ball head 12 with elastic tip 33 acting as the fulcrum of the movement, is applied to ball head 12.

Therefore, as long as dimensional tolerances of the components of the ball joint, i. e. housing 2, ball head 12, and bearing seat 4, are in the range of the distance moved by the portions deformed in resistance to the elastic force when ball head 12 is enveloped, the dimensional tolerances of the components are compensated because of the restoring force resulting from the elasticity of bearing seat 4 applied to ball head 12.

As described above, concavity 27 and cavity portion 32 permit elastic deformation of second slide portion 31. The outer diameter of bearing seat 4 becomes narrower downward from insertion hole 18 toward bottom portion 21 in such a manner that the outer surface of bearing seat 4 in the vicinity of bottom portion 21 faces the inner surface of housing 2 with a gap therebetween to permit movement of bearing seat 4. This configuration is effective in increasing the magnitude of elastic deformation due to the pushing force to ball head 12 resulting from the elastic restoring force of bearing seat 4 and maintaining the energy to push ball head 12, which is generated by the restoring force of bearing seat 4, thereby giving the ball joint capacity for friction compensation, and also in increasing the capacity for compensating dimensional tolerance of component parts. Therefore, the required tolerances of dimensional accuracy required of the component parts are expanded. This provides easier production and improved productivity. Because yield is thus improved, production cost is reduced.

Because second slide portion 31 has a curvature radius smaller than the curvature radius of ball head 12, second slide portion 31 is elastically deformed so that the ball head 12 comes in surface-contact with the elastically deformed second slide portion 31. The ball joint according to the invention reduces load applied to the contact area compared with conventional configurations where line-contact is made. Thus, the ball joint according to the invention prevents breakage or wear damage to bearing seat 4, which may otherwise occur due to pressure when a heavy load is applied to ball stud 3.

Furthermore, when a heavy load is applied to ball stud 3, the load is absorbed by deformation of components, such as elastic bending deformation of first and second load-bearing portions 23/24, which have come in contact with bottom portion 6 of inner chamber 7 of housing 2, elastic bending deformation of bearing seat 4 due to concavity 27 located between first and second load-bearing portions 23/24, elastic deformation of second slide portion 31, and widened deformation of the portion of bearing seat 4 which is the vicinity of bottom portion 21 . Thus, setting and damage to bearing seat 4 is prevented, thereby improving its load-sustenance capacity and durability.

Because second load-bearing portion 24 includes grooves 26 having depth t₁,of approximately 0.3 mm, second load-bearing portion 24 is curved in elastic deformation when a heavy load is applied to ball stud 3, with its grooves 26 coming into contact with bottom portion 6 of housing 2. The resulting increase in the load-bearing area prevents setting and damage to bearing seat 4, thereby further improving its durability and load-sustenance capacity.

Since bearing seat 4 according to the invention is an integrally formed entity, the number of necessary members is reduced compared to conventional ball joints. This simplifies assembly of ball joint 1 and reduces production cost.

Furthermore, because first and second slide portions 30/31 are formed in the shape of projected partitions, a space is formed between the area between slide portions 30/31 and the outer surface of ball head 12 and also between the outer surface of ball head 12 and the area in the vicinity of contact between cylindrical portion 19 and bottom portion 21 of bearing seat 4, it is possible to supply lubricant over the entire outer surface of ball head 12 and in cavity portion 32. Therefore, smooth and stable operation is ensured.

Although the invention is explained referring to the above embodiment, which includes one each cavity portion 32 and concavity 27, in addition to second slide portion 31 which is elastically deformed by a thin elastic tip 33, a plurality of elastic tips 33 may be provided by means of providing a plurality of cavity portions 32 and concavities 27 so that a plurality of second slide portions 31 are formed on bottom portion 21 of bearing seat 4, in the shape of waves on bottom portion 21.

In one configuration of a ball joint according to the present invention, the slide portions of the bearing seat are formed so that they are capable of being elastically deformed by means of the concavity and the cavity portion when the ball head comes into contact with the slide portions and slide thereon. As a result of this configuration, the energy to push the ball head, which is generated by the elastic restoring force of the bearing seat, is maintained because of the bearing seat which is elastically deformed by the load-bearing portions and the concavity, the load-bearing portions being in contact with the bottom portion of the inner chamber of the housing, and the concavity facing the bottom portion with a specified space therebetween. Thus, according to the invention, the ball joint is given a capability for friction compensation, and the dimensional tolerance of component parts is compensated. Furthermore, when a heavy load is applied to the ball stud, the load is absorbed by the elastic deformation of the slide portions and the deformation of the bearing seat which is bent by the load-bearing portions and the concavity, so that the bearing seat is prevented from permanent setting and damages, its load-sustenance capacity and durability being thus increased.

A ball joint according to a further configuration the present invention includes a ball joint wherein an outer diameter of the bearing seat has an outer diameter becomes narrower downward from the insertion hole toward the bottom portion so that the outer surface of the bearing seat in the vicinity of the bottom portion faces the inner surface of the housing, with a gap therebetween to permit movement of the bearing seat. Therefore, when enveloping the ball head, the portion near the load-bearing portion curves in elastic deformation towards the aforementioned gap for movement, in a direction permitting the bearing seat to expand. As the energy to push the ball head, which is generated by the elastic restoring force of the bearing seat, is thus increased, the capacity of the ball stud for friction compensation is increased, and, therefore, the capacity for compensating dimensional tolerance of component parts is increased, which simplifies production of component parts. As a result, the productivity is improved, and owing to improved yield production cost is reduced.

Having described preferred embodiments of the invention with reference to the accompanying drawings, it is to be understood that the invention is not limited to those precise embodiments, and that various changes and modifications may be effected therein by one skilled in the art without departing from the scope of spirit of the invention as defined in the appended claims.

## Claims

1. A ball joint comprising
a housing having an aperture and an inner chamber, the bottom portion of which is located at the end opposite to said aperture;
a ball stud having a ball head to be disposed in said inner chamber of said housing, and a stud portion which is integrally formed with said ball head so as to project from said aperture; and
a bearing seat made of synthetic resin which has both resiliency and rigidity, said bearing seat to be disposed in the inner chamber of the housing to envelop the ball head of said ball stud, permitting the ball head to slide therein, with the stud portion of said ball stud projecting from an insertion hole of the bearing seat; wherein:
said bearing seat is provided with:
a plurality of load-bearing portions formed on the outer surface that faces the bottom portion of the inner chamber of said housing, said bottom portion of the inner chamber being located opposite to said insertion hole at an approximately concentric position therewith, said load-bearing portions being formed at respective positions at different distances from the center of the bearing seat and capable of coming into contact with the inner chamber of the housing;
a concavity provided in the outer surface of the bearing seat, said concavity being located between said load-bearing portions and facing said bottom portion so that a space is provided between the bearing seat and the bottom portion;
a cavity portion provided in the inner surface of the bearing seat, said inner surface facing said ball head so that said cavity portion forms a gap between the bearing seat and the ball head; and
a slide portion formed on the inner side of the bearing seat, in other words on the surface facing the ball head of the ball stud, said slide portion being located behind said concavity and capable of curving in elastic deformation into said cavity portion and coming into contact with the ball head of the ball stud in such a manner that the ball head is capable of sliding on the slide portion.

2. A ball joint as claimed in claim 1, wherein the bearing seat is formed such that the outer diameter thereof becomes narrower as it descends from the insertion hole toward the load-bearing portions and that the outer surface of the portion near the load-bearing portions faces the inner surface of the housing, a gap for movement being provided therebetween, so that enveloping the ball head causes said portion near the load-bearing portions to curve in elastic deformation towards said gap for movement, in such a direction as to increase the diameter of the bearing seat.

3. A ball joint comprising
housing;
an aperture in said housing leading into an inner chamber;
a bottom portion of said inner chamber being located at the end of
said housing opposite to said aperture;
a ball stud;
said ball stud including a ball head and a stud portion integrally formed therewith;
a bearing seat disposed in said inner chamber;
said bearing seat enveloping said ball head, with said stud portion protruding from said aperture;
said bearing seat being a synthetic resin which has both resiliency and rigidity, thereby permitting said ball head to slide therein;
a plurality of load-bearing portions formed on an outer surface of said bearing seat facing a bottom portion of said inner chamber;
said bottom portion of said inner chamber being located opposite said insertion hole at an approximately concentric position therewith;
said plurality of load-bearing portions being disposed at at least first and second different distances from a center of said bearing seat;
said at least first and second load-bearing portions contacting said inner chamber of said housing;
a concavity in an outer surface of said bearing seat;
said concavity being located between said at least first and second load-bearing portions and facing said bottom portion so that a space is formed between said bearing seat and said bottom portion;
a cavity portion in an inner surface of the bearing seat;
said inner surface facing said ball head so that said cavity portion forms a gap between said bearing seat and said ball head; and
a slide portion formed in an inner surface of said bearing seat facing said ball head;
said slide portion being located inward toward a bottom from said concavity;
said slide portion being elastically deformable into said cavity portion by force applied thereto from said ball head, whereby said ball head is slideable on said slide portion.

4. A ball joint as claimed in claim 1, wherein:
an outer diameter of said bearing seat becomes narrower as it descends from said insertion hole toward said at least first and second load-bearing portions;
an outer surface of a portion of said bearing seat portion near said at least first and second load-bearing portions faces an inner surface of said housing, leaving a gap therebetween to permit movement of a lower portion of said bearing seat in said housing so that enveloping said ball head causes said portion near said at least first and second load-bearing portions to curve in elastic deformation toward said gap for movement, in such a direction as to increase a diameter of said bearing seat.

5. A resin bearing seat for a bearing, comprising:
an inner cavity;
at least first and second slide portions in an inner surface of said inner cavity;
a first annular groove in said inner surface between said first and second slide portions;
a second annular groove in an outer surface of said bearing seat;
said second annular groove forming, with said first annular groove, an elastic tip; and
said elastic tip being elastically deformable to permit said second slide portion to deform said second slide portion at least partly into said first annular groove.

6. A ball joint comprising:
a metallic housing;
said metallic housing including an inner chamber;
a resin bearing seat;
said bearing seat being disposed in said inner chamber;
an inner cavity in said bearing seat;
at least first and second slide portions in an inner surface of said inner cavity;
a first annular groove in said inner surface between said first and second slide portions;
a second annular groove in an outer surface of said bearing seat;
said second annular groove forming, with said first annular groove, an elastic tip; and
said elastic tip being elastically deformable to permit said second slide portion to deform said second slide portion at least partly into said first annular groove.
